# FASCICULE DE BREVET EUROPEEN

(11) **EP 2 812 214 B1**
(45) Date de publication et mention de la délivrance du brevet: **30.03.2016**
(21) Numéro de dépôt: 12791476.0
(22) Date de dépôt: 26.11.2012
(51) Int. Cl.: G01S 7/521, G01S 15/93, B60R 19/48

(54) **ELEMENT DE FIXATION D'UN ORGANE FONCTIONNEL POUR VEHICULE AUTOMOBILE**
BEFESTIGUNGSELEMENT ZUM BEFESTIGEN EINER FUNKTIONSKOMPONENTE EINES KRAFTFAHRZEUGS
FIXATION ELEMENT OF A FUNCTIONAL BODY FOR MOTOR VEHICLE

(30) Priorité: 07.02.2012 FR 1251105
(43) Date de publication de la demande: 17.12.2014
(73) Titulaire: Renault S.A.S., 92100 Boulogne-Billancourt (FR)
(72) Inventeur: FEUTRIE, Arnaud, F-78380 Bougival (FR); LUPU, Stefan, Bucarest (RO)
(86) Numéro de dépôt international: PCT/EP2012/073557
(87) Numéro de publication internationale: WO 2013/117262

(56) Documents cités:
- EP-A1- 1 083 099
- FR-A1- 2 950 943

## Description

La présente invention concerne un élément de fixation d'un organe fonctionnel, typiquement un capteur à ultrasons, à une peau de pare-chocs d'un véhicule automobile. L'invention se rapporte plus particulièrement à un élément de fixation comprenant des moyens de maintien de l'organe fonctionnel, une plaque de fixation à une zone de réception de la peau de pare-chocs, la plaque de fixation ayant une région centrale à laquelle sont raccordés les moyens de maintien, et des ailettes s'étendant de part et d'autre de la région centrale destinées à être accolées à une face de la peau de pare-chocs.

On connaît des éléments de fixation notamment pour capteur à ultrasons dont la plaque de fixation est trop rigide pour pouvoir se conformer et s'adapter à des galbes différents de peau de pare-chocs. Un pare-chocs comporte classiquement trois ou quatre capteurs à ultrasons répartis transversalement sur la largeur du pare-chocs, le galbe du pare-chocs étant variable suivant la zone considérée (en particulier la forme est recourbée sur les parties latérales). Compte tenu de cette différence de galbe, il faut parfois prévoir des éléments de fixation spécifiques pour ces différentes zones. Ceci engendre une grande diversité de pièces et un surcoût correspondant. Ceci implique également un montage plus délicat puisqu'il faut sélectionner un élément de fixation spécifique pour une zone de réception ayant un galbe donné.

On connaît également via le document FR2950943, qui décrit le préambule de revendication 1, un élément de fixation du type précité, dont la plaque de fixation en matière plastique a une épaisseur inférieure ou égale à 1,5 mm afin de pouvoir être conformée à la géométrie de la zone de réception. Un tel élément de fixation peut cependant présenter une faiblesse dans la région centrale de la plaque, les moyens de maintien de l'organe fonctionnel qui sont raccordés à une région centrale de la plaque de fixation n'étant pas eux même maintenus de façon suffisamment ferme par rapport à la plaque de fixation, en particulier par rapport aux ailettes. On a également proposé dans le document WO2001/101412 A1 un élément de fixation conforme à l'énoncé précédent, dans lequel un joint d'interface prévu entre les ailettes et la peau de pare-chocs, est conformable à différentes géométries de pare-chocs. Cependant, un tel joint est un élément additionnel qui complique et surenchérit l'élément de fixation. Le joint ne garantit pas non plus la fermeté de la fixation entre l'élément de fixation et la peau de pare-chocs puisqu'il éloigne la partie rigide de l'élément de fixation, à laquelle est lié le capteur à ultrasons, de la peau de pare-chocs.

L'invention vise à pallier tout ou partie des inconvénients précédents en proposant un élément de fixation de conception simple et particulièrement astucieuse.

A cet effet, l'invention a pour objet un élément de fixation d'un organe fonctionnel à une peau de pare-chocs d'un véhicule automobile, l'élément comprenant des moyens de maintien de l'organe fonctionnel, une plaque de fixation à une zone de réception de la peau de pare-chocs, la plaque de fixation ayant une région centrale à laquelle sont raccordés les moyens de maintien, et des ailettes s'étendant de part et d'autre de la région centrale, caractérisé en ce que les ailettes ont une épaisseur variant en diminuant depuis une zone adjacente à la région centrale jusqu'à leur extrémité libre, cette variation s'étendant sur au moins la moitié de la longueur de chaque ailette, considérée entre leur base de liaison à la région centrale et l'extrémité libre.

Selon d'autres caractéristiques avantageuses de l'invention :
- chaque ailette a une épaisseur dont la variation est progressive entre la zone adjacente à la région centrale et leur extrémité libre,
- chaque ailette a une épaisseur dont la variation s'étend sensiblement sur toute la longueur de l'ailette, entre la base et l'extrémité libre,
- l'épaisseur de chaque ailette varie entre une épaisseur maximale E2 et une épaisseur minimale E1, le rapport de l'épaisseur minimale E1 sur l'épaisseur maximale E2 étant compris entre 1/3 et 2/3,
- l'épaisseur minimale correspond sensiblement à la moitié de l'épaisseur maximale,
- l'épaisseur minimale E1 est de 1 mm tandis que l'épaisseur maximale E2 est de 2 mm,
- l'élément de fixation est en matière plastique,

L'invention a également pour objet un ensemble comprenant un élément de fixation ayant tout ou partie des caractéristiques précédentes, et un organe fonctionnel qui est un capteur à ultrasons maintenu par les moyens de maintien.

L'invention a encore pour objet un pare-chocs de véhicule automobile comprenant une peau de pare-chocs ayant une zone de réception et un élément de fixation ayant tout ou partie des caractéristiques précitées, fixé sur la zone de réception par la plaque de fixation.

L'invention sera mieux comprise à la lecture de la description suivante d'un exemple non limitatif de l'invention, et à la lumière des dessins annexés sur lesquels :
- la figure 1 représente une vue schématique d'un élément de fixation selon l'invention, selon un angle de vue correspondant à la direction longitudinale du capteur à ultrasons maintenu par l'élément de fixation,
- la figure 2 correspond à une vue suivant la section A-A de l'élément de fixation de la figure 1, l'élément de fixation étant accolé à une peau de pare-chocs ayant une forme localement plane, et
- la figure 3 correspond à une vue similaire à la section A-A de la figure 2, l'élément de fixation étant accolé à une peau de pare-chocs présentant localement un galbe.

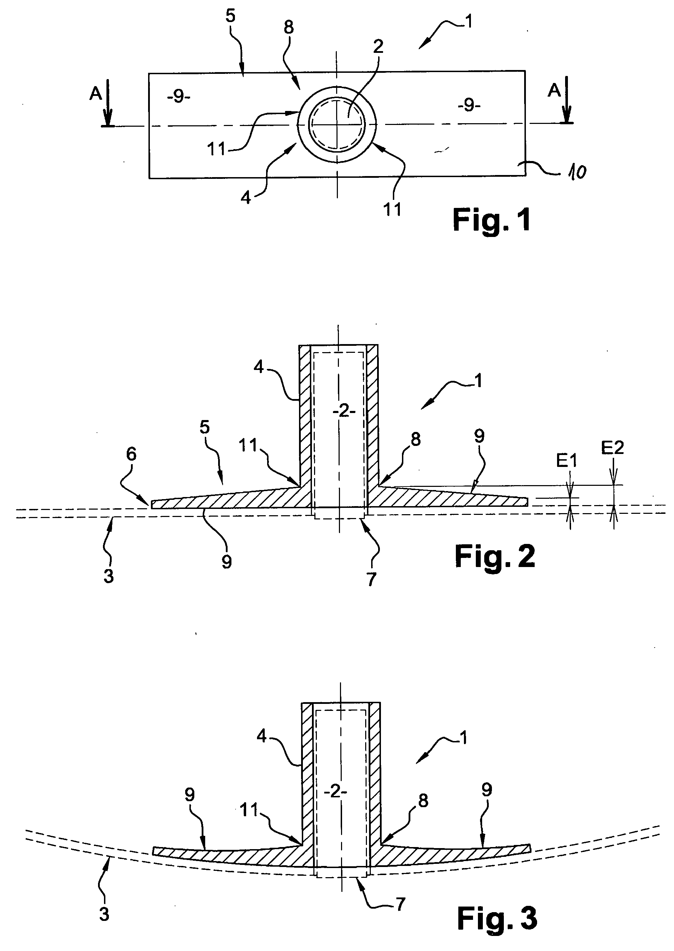

On a représenté à la figure 1 un élément de fixation 1 d'un organe fonctionnel 2 à une peau de pare-chocs 3 d'un véhicule automobile. L'organe fonctionnel 2, représenté schématiquement en pointillé par un cercle à la figure 1 et par un rectangle aux figures 2 et 3 est typiquement un capteur à ultrasons destiné à évaluer la proximité d'un obstacle lors des manoeuvres du véhicule.

L'élément de fixation 1 comprend des moyens de maintien 4 du capteur 2 se présentant par exemple comme cela est illustré sous la forme d'un fût dans lequel le capteur 2 est introduit longitudinalement. Le capteur peut être maintenu par encliquetage ou par tout autre moyen équivalent. L'élément de fixation 1 comprend également une plaque de fixation 5 à une zone de réception 6 de la peau de pare-chocs 3. La plaque 5 a une forme s'inscrivant dans un plan sensiblement perpendiculairement à la direction longitudinale du capteur et du fût. La plaque 5 est destinée à être accolée à une face interne de la peau de pare-chocs, et plus particulièrement à une zone de réception de la peau de pare-chocs comportant généralement un orifice 7 au travers duquel le capteur 2 est situé en vis à vis ou de façon débouchante extérieurement via cet orifice 7. La plaque de fixation 5 comporte d'une part une région centrale 8 à laquelle sont raccordés les moyens de maintien 4, c'est-à-dire la base du fût accueillant le capteur 2, et d'autres part des ailettes 9 s'étendant de part et d'autre de la région centrale 8, dans des direction diamétralement opposée.
Selon un aspect essentiel de l'invention, les ailettes 9 ont une épaisseur qui varie en diminuant depuis une zone adjacente à la région centrale 8 jusqu'à leur extrémité libre 10. L'extrémité libre s'entend comme étant à l'opposé de la région centrale 8. La variation d'épaisseur s'étend sur au moins la moitié de la longueur de chaque ailette 9. La longueur est considérée ici entre la base 11 reliant chaque ailette 9 à la région centrale 8 et l'extrémité libre 10. La variation d'épaisseur est en effet conformée sur une longueur qui doit être suffisamment étendue pour permettre une flexion d'une partie significative de l'extrémité de chaque ailette 9 tout en ayant une base 11 de liaison relativement rigide avec la région centrale 8. On considère que la variation d'épaisseur doit être réalisée sur une longueur minimale de l'ordre de la moitié de la longueur totale de chaque ailette 9. Ainsi la zone adjacente évoquée précédemment délimitant la variation de longueur du côté de la région centrale 8 peut être strictement accolée à cette région centrale 8 mais peut en variante être légèrement distante de celle-ci. Cette variation d'épaisseur peut ainsi être concentrée du côté de la région centrale, ou être décalée vers l'extrémité libre 10 de chaque ailette 9. Bien entendu, selon un mode de réalisation particulier de l'invention illustré sur les figures, la variation de l'épaisseur peut être réalisée sur la longueur totale de chaque ailette 9, depuis la base 11 jusqu'à l'extrémité libre 10.
La variation d'épaisseur de chaque ailette 9 peut en outre être progressive ou plus précisément continue sur la longueur considérée, comme représenté sur les figures. Chaque ailette a de ce fait la forme générale d'un coin ou d'une rampe. Dans une variante de réalisation non illustrée, on peut également prévoir que la variation d'épaisseur soit réalisée de façon non progressive ou discontinue, c'est-à-dire par paliers. La variation d'épaisseur peut également être conformée de façon proportionnelle ou linéaire à mesure que l'on s'avance vers l'extrémité libre 10. En variante, la variation d'épaisseur peut ne pas être proportionnelle ou linéaire.

Dans l'exemple illustré on prévoit que la variation d'épaisseur s'effectue entre une épaisseur maximale E2 (adjacente à la région centrale 8) et une épaisseur minimale E1 (à l'extrémité libre 10). Le rapport de l'épaisseur minimale E1 sur l'épaisseur maximale E2 est typiquement compris entre 1/3 et 2/3 et est plus particulièrement de l'ordre de 1/2.

Dans un mode de réalisation particulier de l'invention, on prévoit que l'épaisseur minimale E1 est de 1 mm tandis que l'épaisseur maximale E2 est de 2 mm.

L'élément de fixation 1 est en matière plastique. La plaque de fixation 5 et les moyens de maintien 4 sont venus d'injection et forment une pièce monobloc.

Bien entendu, l'invention n'est pas limitée aux modes ou variantes de réalisation décrits précédemment et comprends tous les équivalents techniques de ces moyens.

## Revendications

1. Elément de fixation (1) d'un organe fonctionnel (2) à une peau de pare-chocs (3) d'un véhicule automobile, l'élément comprenant des moyens de maintien (4) de l'organe fonctionnel (2), une plaque de fixation (5) à une zone de réception (6) de la peau de pare-chocs (3), la plaque de fixation (5) ayant une région centrale (8) à laquelle sont raccordés les moyens de maintien (4), et des ailettes (9) s'étendant de part et d'autre de la région centrale (8), **caractérisé en ce que** les ailettes (9) ont une épaisseur variant en diminuant depuis une zone adjacente à la région centrale (8) jusqu'à leur extrémité libre (10), cette variation s'étendant sur au moins la moitié de la longueur de chaque ailette (9), considérée entre leur base (11) de liaison à la région centrale (8) et l'extrémité libre (10).

2. Elément de fixation (1) selon la revendication 1, **caractérisé en ce que** chaque ailette (9) a une épaisseur dont la variation est progressive entre la zone adjacente à la région centrale (8) et leur extrémité libre (10).

3. Elément de fixation (1) selon la revendication 1 ou 2, **caractérisé en ce que** chaque ailette (9) a une épaisseur dont la variation s'étend sensiblement sur toute la longueur de l'ailette (9), entre la base (11) et l'extrémité libre (10).

4. Elément de fixation (1) selon l'une quelconque des revendications 1 à 3, **caractérisé en ce que** l'épaisseur de chaque ailette (9) varie entre une épaisseur maximale E2 et une épaisseur minimale E1, le rapport de l'épaisseur minimale E1 sur l'épaisseur maximale E2 étant compris entre 1/3 et 2/3.

5. Elément de fixation (1) selon la revendication 4, **caractérisé en ce que** l'épaisseur minimale (E1) correspond sensiblement à la moitié de l'épaisseur maximale (E2).

6. Elément de fixation (1) selon la revendication 5, **caractérisé en ce que** l'épaisseur minimale (E1) est de 1 mm tandis que l'épaisseur maximale (E2) est de 2 mm.

7. Elément de fixation (1) selon l'une quelconque des revendications précédentes **caractérisé en ce qu'**il est réalisé en matière plastique.

8. Ensemble d'un élément de fixation (1) selon l'une quelconque des revendications précédentes, et d'un organe fonctionnel (2) qui est un capteur à ultrasons maintenu par les moyens de maintien (4).

9. Pare-chocs de véhicule automobile comprenant une peau de pare-chocs (3) ayant une zone de réception (6) et un élément de fixation (1) selon l'une quelconque des revendications 1 à 7 fixé sur la zone de réception (6) par la plaque de fixation (5).

## Patentansprüche

1. Element zur Befestigung (1) eines funktionellen Elements (2) an einer Stoßfängerverkleidung (3) eines Kraftfahrzeugs, wobei das Element Mittel zum Festhalten (4) des funktionellen Elements (2), eine Platte zur Befestigung (5) an einer Aufnahmezone (6) der Stoßfängerverkleidung (3), wobei die Befestigungsplatte (5) einen zentralen Bereich (8) besitzt, mit welchem die Festhaltemittel (4) verbunden sind, und Flügel (9) aufweist, welche sich beiderseits des zentralen Bereichs (8) erstrecken, **dadurch gekennzeichnet, dass** die Flügel (9) eine Dicke besitzen, welche sich verändert, indem sie von einer Zone in der Nähe des zentralen Bereichs (8) bis zu ihrem freien Ende (10) abnimmt, wobei sich diese Veränderung über mindestens die Hälfte der Länge eines jeden Flügels (9) erstreckt, wenn sie zwischen der Verbindungsbasis (11) am zentralen Bereich (8) und dem freien Ende (10) berücksichtigt wird.

2. Befestigungselement (1) nach Anspruch 1, **dadurch gekennzeichnet, dass** jeder Flügel (9) eine Dicke besitzt, deren Veränderung zwischen der dem zentralen Bereich (8) benachbarten Zone und ihrem freien Ende (10) progressiv ist.

3. Befestigungselement (1) nach Anspruch 1 oder 2, **dadurch gekennzeichnet, dass** jeder Flügel (9) eine Dicke besitzt, deren Veränderung sich im Wesentlichen über die ganze Länge des Flügels (9) zwischen der Basis (11) und dem freien Ende (10) erstreckt.

4. Befestigungselement (1) nach einem der Ansprüche 1 bis 3, **dadurch gekennzeichnet, dass** die Dicke jedes Flügels (9) zwischen einer maximalen Dicke E2 und einer minimalen Dicke E1 variiert, wobei das Verhältnis von minimaler Dicke E1 zu maximaler Dicke E2 zwischen 1/3 und 2/3 liegt.

5. Befestigungselement (1) nach Anspruch 4, **dadurch gekennzeichnet, dass** die minimale Dicke (E1) im Wesentlichen der Hälfte der maximalen Dicke (E2) entspricht.

6. Befestigungselement (1) nach Anspruch 5, **dadurch gekennzeichnet, dass** die minimale Dicke (E1) 1 mm beträgt, während die maximale Dicke (E2) 2 mm beträgt.

7. Befestigungselement (1) nach einem der vorhergehenden Ansprüche, **dadurch gekennzeichnet, dass** es aus Kunststoff hergestellt ist.

8. Baugruppe aus einem Befestigungselement (1) nach einem der vorhergehenden Ansprüche und einem funktionellen Element (2), welches ein Ultraschall-Sensor ist, welcher durch die Festhaltemittel (4) festgehalten wird.

9. Stoßfänger eines Kraftfahrzeugs, welcher eine Stoßfängerverkleidung (3) mit einer Aufnahmezone (6) und einem Befestigungselement (1) nach einem der Ansprüche 1 bis 7 aufweist, welches durch die Befestigungsplatte (5) an der Aufnahmezone (6) befestigt ist.

## Claims

1. Fixing element (1) for fixing a functional component (2) to a bumper skin (3) of a motor vehicle, the element comprising retaining means (4) for retaining the functional component (2), a fixing plate (5) for fixing to a receiving zone (6) of the bumper skin (3), the fixing plate (5) having a central region (8) to which the retaining means (4) are connected, and fins (9) extending on either side of the central region (8), **characterized in that** the fins (9) have a thickness which varies, decreasing from a zone adjacent to the central region (8) as far as their free end (10), this variation extending over at least half the length of each fin (9) considered between their base (11) at which they are connected to the central region (8) and the free end (10).

2. Fixing element (1) according to Claim 1, **characterized in that** each fin (9) has a thickness whose variation is progressive between the zone adjacent to the central region (8) and their free end (10).

3. Fixing element (1) according to Claim 1 or 2, **characterized in that** each fin (9) has a thickness whose variation extends substantially over the whole length of the fin (9), between the base (11) and the free end (10).

4. Fixing element (1) according to any one of Claims 1 to 3, **characterized in that** the thickness of each fin (9) varies between a maximum thickness E2 and a minimum thickness E1, the ratio of the minimum thickness E1 to the maximum thickness E2 being between 1/3 and 2/3.

5. Fixing element (1) according to Claim 4, **characterized in that** the minimum thickness (E1) corresponds substantially to half the maximum thickness (E2).

6. Fixing element (1) according to Claim 5, **characterized in that** the minimum thickness (E1) is 1 mm while the maximum thickness (E2) is 2 mm.

7. Fixing element (1) according to any one of the preceding claims, **characterized in that** it is made of plastic.

8. Assembly consisting of a fixing element (1) according to any one of the preceding claims and of a functional component (2) which is an ultrasound sensor retained by the retaining means (4).

9. Motor vehicle bumper comprising a bumper skin (3) having a receiving zone (6) and a fixing element (1) according to any one of Claims 1 to 7 fixed to the receiving zone (6) by the fixing plate (5).
